# EUROPÄISCHE PATENTSCHRIFT

(11) **EP 0 866 543 B1**
(45) Veröffentlichungstag und Bekanntmachung des Hinweises auf die Patenterteilung: **31.10.2001**
(21) Anmeldenummer: 98105182.4
(22) Anmeldetag: 23.03.1998
(51) Int. Cl.: H02K 7/00, H02K 11/00, H01H 19/62

(54) **Stellantrieb**
Positioning actuator
Entraînement de positionneur

(30) Priorität: 22.03.1997 DE 19712153
(43) Veröffentlichungstag der Anmeldung: 23.09.1998
(73) Patentinhaber: ASG Luftfahrttechnik und Sensorik GmbH, 69469 Weinheim (DE)
(72) Erfinder: Winkler, Udo, 63255 Langen (DE); Oberheim, Rainer, 64625 Bensheim (DE); Mees, Miodrag, 69723 Schwetzingen (DE)
(74) Vertreter: Stoffregen, Hans-Herbert, Dr. Dipl.-Phys. Patentanwalt

(56) Entgegenhaltungen:
- EP-A- 0 726 587
- FR-A- 2 118 828
- GB-A- 1 511 769
- US-A- 3 846 597

## Beschreibung

Die Erfindung bezieht sich auf einen Stellantrieb zum Betätigen von zumindest einem Signalgeber, insbesondere elektromagnetischer Stellantrieb zum Betätigen von zumindest einem Schalter wie Mikroschalter, umfassend eine über einen Antrieb wie Motor drehbare Welle, die in Abhängigkeit ihrer Stellung mittelbar oder unmittelbar den Signalgeber betätigt.

Entsprechende Stellantriebe, die auch als Aktuatoren bezeichnet werden, werden zum Schalten von zum Beispiel Ventilen, Schiebern, Drosselklappen in Treibstoffsystemen von Luftfahrzeugen und Hubschraubern oder elektrischen Elementen benutzt. Hierzu ist es bekannt, mittels eines Elektromotors über eine Schneckenwelle wie Zahnräder und Planetenstufe eine mit Nocken versehene Welle zu drehen, in Abhängigkeit von deren Stellung eine auf einen Mikroschalter einwirkende Fahne betätigt wird. Die Fahne kann als Blechstreifen ausgebildet sein. Der Stellantrieb und seine Komponenten ist innerhalb seines Betriebsbereichs unterschiedlichsten Randbedingungen, wie Lastmagnet, Versorgungsspannung, Temperatur und Luftdruck sowie Bautoleranz unterworfen, so dass hierdurch ein präziser Schaltvorgang, d. h. ein solcher mit großer Steilheit nicht realisierbar ist.

Ein solcher Stellantrieb ist von der Montage her aufwendig, da ein genaues Positionieren und Formen der Fahne erforderlich ist. Durch die Längenerstreckung der Fahnen ist zudem eine Beschränkung hinsichtlich der Anzahl der Schalter, die einer Welle bzw. den von dieser abragenden Nocken zuordbar sind.

Der vorliegenden Erfindung liegt das Problem zu Grunde, einen Stellantrieb der eingangs genannten Art so weiterzubilden, dass eine überaus präzise Betätigung des Signalgebers, also ein Schalten mit steiler Kennlinie möglich ist. Die verwendeten Elemente sollen einfach aufgebaut sein, wobei eine weitgehende Unabhängigkeit von erwähnten Parametern in Bezug auf die durchzuführenden Schaltvorgänge gegeben sein soll. Auch soll die Montage vereinfacht sein.

Erfindungsgemäß wird das Problem im wesentlichen dadurch gelöst, dass in der Welle eine erste Aussparung vorhanden ist, dass im Verstellweg der Aussparung die Welle von einer Umhüllenden umgeben ist, die im Bereich des zumindest einen Signalgebers eine zweite Aussparung aufweist, dass sich in der zweiten Aussparung ein Betätiger für den Signalgeber erstreckt, der entweder durch ein radial in der ersten Aussparung verschiebbares erstes Element oder durch ein in die erste Aussparung einbringbares in der zweiten Aussparung verschiebbares zweites Element betätigbar ist. Dabei ist die Welle vorzugsweise von einer Hülse oder einem Abschnitt einer solchen als Umhüllenden umgeben, in der sich radial die zweite Aussparung erstreckt, sofern in dieser radial verschiebbar das erste Element in Richtung des Schaltelementes kraftbeaufschlagt verschiebbar angeordnet ist.

Das kraft- wie federbeaufschlagte erste Element ist vorzugsweise ein Kugel- oder Bolzenelement, so dass beim Überfahren der Randbereiche der in der Hülse vorhandenen zweiten Aussparung ein gleitender Übergang sichergestellt ist.

Ist die erste in der Welle radial verlaufende Aussparung auf die in der Umhüllenden wie Hülse in Bezug auf die Welle ebenfalls radial verlaufende zweite Aussparung ausgerichtet, so wird das erste Element wie federbeaufschlagte Kugel in die zweite Aussparung bereichsweise hineingeschoben, wodurch ein Schaltvorgang ausgelöst werden kann, d. h., dass das erste Element ein Schaltglied wie Schaltstößel des Signalgebers wie Mikroschalter betätigen kann. Durch die Abstimmung von Kugeldurchmesser und Durchmesser in der zweiten Aussparung und somit den möglichen Hub der Kugel kann sehr präzise ein Schaltvorgang ausgelöst werden, d. h. die Schaltkennlinie verläuft überaus steil.

Eine besonders einfache Konstruktion ergibt sich dann, wenn in der zweiten in der Umhüllenden verlaufenden Aussparung ein Kugelelement vorhanden ist, welches in Richtung der Welle -gegebenenfalls mittelbar- mittels eines Schaltglieds des Signalgebers kraftbeaufschlagt ist. Ist die in der Welle vorhandene Aussparung auf die der Hülse ausgerichtet, so gelangt das Kugelelement bereichsweise in die erste Aussparung, wodurch ein Schaltvorgang ausgelöst wird.

Die erste Aussparung ist in diesem Fall vorzugsweise eine im Schnitt V-förmige Vertiefung, die sich in axialer Richtung der Welle erstreckt.

Da weder Schaltfahnen noch sonstige stark, von variablen Randbedingungen und Bautoleranzen abhängige Elemente notwendig sind, um einen Schaltvorgang auszulösen, ist sichergestellt, dass eine Änderung der Randbedingungen und/oder Bautoleranzen zu keiner Beeinflussung des Schaltvorganges führen. Durch die Abstimmung der Querschnitte der Aussparungen und der in diesen in Bezug auf die Welle radial verschiebbaren Elemente wie insbesondere Kugeln ist des Weiteren eine präzise Hubeinstellung und damit Reproduzierbarkeit der Schaltvorgänge möglich. Der Zusammenbau der zusammenwirkenden Elemente ist einfach, so dass der erfindungsgemäße Stellantrieb kostengünstig herstellbar ist. Auch ist eine problemlose Wartung und Instandsetzung möglich.

Insbesondere ist vorgesehen, dass zumindest zwei Signalgeber hintereinander in axialer Richtung der Welle betrachtet angeordnet sind, wobei die Signalgeber in Bezug auf ihr jeweiliges Schaltglied radial versetzt verlaufen können. Hierdurch können in kurzen Zeitabständen mehrere Schaltvorgänge ausgelöst werden.

Aber nicht nur in axialer Richtung, sondern auch radial um die Welle herum können mehrere Signalgeber angeordnet sein. Dabei sind vorzugsweise zumindest zwei Signalgeber bezogen auf die Welle bzw. deren Achse um 90° zueinander versetzt vorgesehen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine erste Ausführungsform eines Stellantriebs,
- Fig. 2: einen Schnitt entlang der Linie A-A in Fig. 1,
- Fig. 3: einen Ausschnitt einer zweiten Ausführungsform eines Stellantriebs und
- Fig. 4: einen Schnitt entlang der Linie B-B in Fig. 3.

In den Figuren, in denen grundsätzlich gleiche Elemente mit gleichen Bezugszeichen versehen sind, sind bevorzugte Ausführungsformen von elektromechanischen Stellantrieben 10, 12 dargestellt, über die vorzugsweise Ventile geschaltet werden sollen, ohne dass hierdurch jedoch eine Einschränkung der Erfindung erfolgt.

Die Stellantriebe 10, 12 umfassen -wie dies von elektromechanischen Stellantrieben bekannt ist- jeweils einen Elektromotor 14, über den eine Schneckenwelle 16 drehbar ist, die ihrerseits über Zahnräder und Planetenstufen eine Welle 18 mit einem Abschnitt 20 in Drehbewegung versetzt, über die in nachstehend beschriebener Weise Mikroschalter 22, 24 und 26 betätigt werden.

Die Welle 18, die in gewohnter Weise in einem Gehäuse 28 des Stellantriebs 10 gelagert ist, ist in Bezug auf ihren Abschnitt 20 von einem hohlzylindrischen oder hülsenartigen Körper 32 umgeben, um den peripher die Schaltelemente 22, 24, 26 angeordnet sind. Der hülsenartige Körper geht bevorzugterweise von einer Zwischenwand 30 des Gehäuses 28 aus.

Der Abschnitt 20 der Welle 18 weist eine Bohrung 34 in Form eines Sacklochs auf, in dem radial verschiebbar eine Kugel 36 angeordnet ist, die mittels eines Federelementes wie Schraubenfeder 38 nach außen, also in Richtung der Hülse 32 gedrückt wird.

Da im Ausführungsbeispiel mehrere in Bezug auf die Welle 18 axial hintereinander angeordnete Schalter 22, 24 zu betätigen sind, sind entsprechend zwei radial verlaufende Sacklöcher 34, 40 vorgesehen, die vorzugsweise parallel, jedoch zumindest in zwei parallel zueinander verlaufenden Ebenen angeordnet sind.

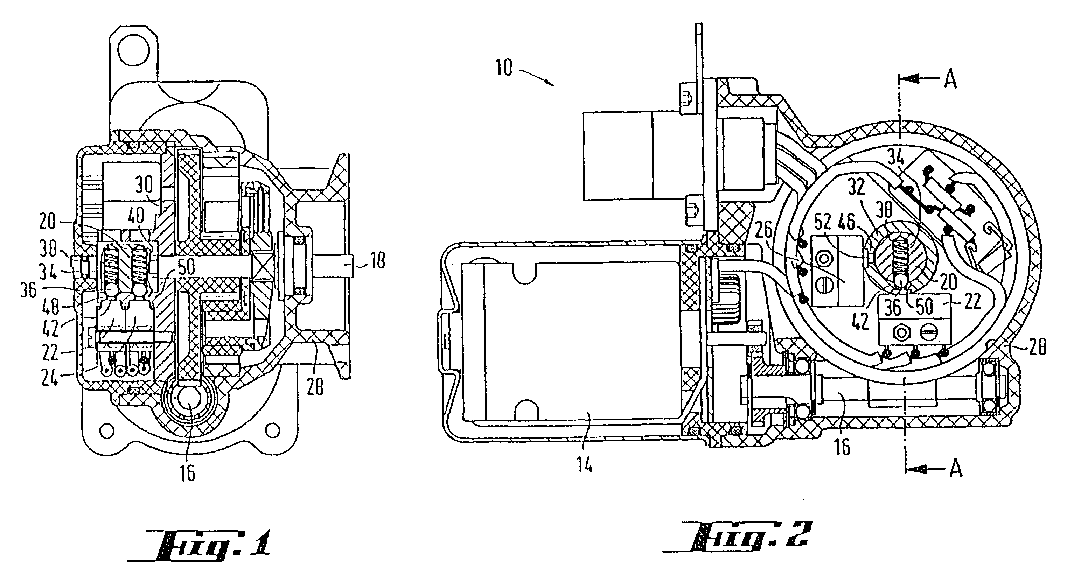

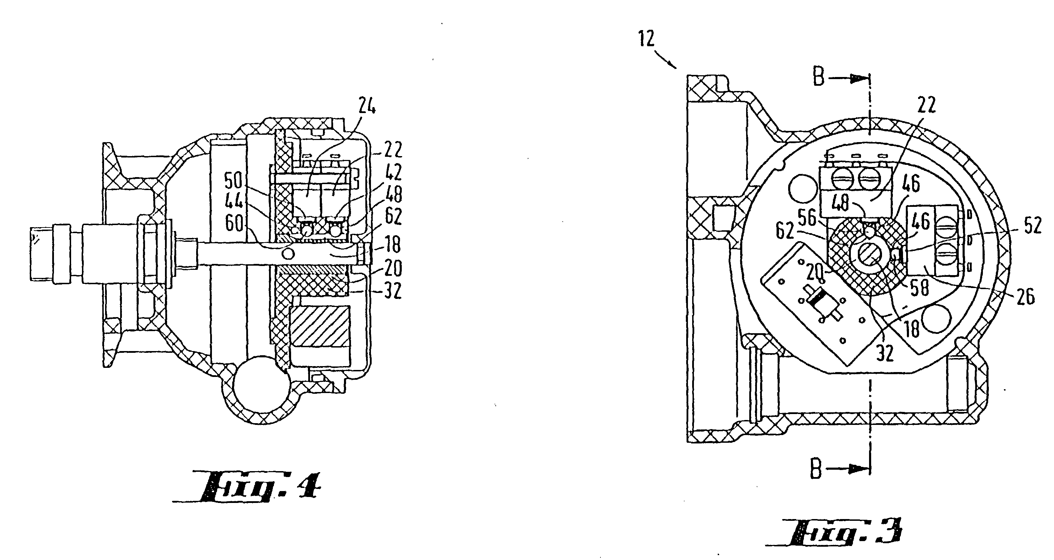

Der hohlzylindrische Abschnitt 32 (Fig. 3, 4) der Zwischenwand 30 weist seinerseits durchgehende Bohrungen 42, 44, 46 auf, innerhalb der sich Schaltglieder 48, 50, 52 der Schalter wie Mikroschalter 22, 24, 26 erstrecken. Diese sind dann von den Kugelelementen 36 betätigbar, wenn die Sacklöcher 36 bzw. 40 auf die entsprechenden Bohrungen 42, 44, 46 ausgerichtet sind. In diesem Fall erstrecken sich die Kugelelemente 36 bereichsweise innerhalb der Bohrungen 42, 44, 46, um auf die Schaltglieder 48, 50 bzw. 52 einzuwirken und den jeweiligen Mikroschalter 22, 24 bzw. 26 zu betätigen. Hierbei beinhalten die Mikroschalter jeweils ein Federelement.

In Abhängigkeit von dem Durchmesser der jeweiligen Kugel 36 bzw. der wirksamen Eindringtiefe der Kugeln 36 in die entsprechenden Bohrungen 42, 44, 46 der Hülse 32 kann mit definiertem Hub das jeweilige Schaltglied 48, 50, 52 der Schaltelemente 22, 24, 26 betätigt werden, so dass sich eine gewünschte Schaltkennlinie ergibt.

Der den Fig. 3 und 4 im Ausschnitt zu entnehmende Stellantrieb 12 unterscheidet sich von denen der Fig. 1 und 2 dahingehend, dass innerhalb der Bohrungen 42, 44, 46 der Hülse 32, die den Abschnitt 20 der Welle 18 umgibt, in Bezug auf die Welle 18 radial verschiebbar Kugelelemente 56, 58, 60 angeordnet sind, die mittelbar oder unmittelbar von den Schaltgliedern 48, 50 bzw. 52 in Richtung des Abschnitts 20 der Welle 18 kraftbeaufschlagt sind, um somit auf der Außenfläche des Abschnitts 20 dann anzuliegen, wenn ein Schaltvorgang nicht ausgelöst werden soll.

In axialer Richtung des Abschnitts 20 verläuft eine im Schnitt V-förmige Nut 62, in die in Abhängigkeit von der Stellung der Welle 18 die Kugeln 56 bzw. 58 bzw. 60 hineingedrückt werden können, wodurch wiederum das entsprechende Schaltglied 48, 50, 52 und damit der zugeordnete Schalter 22, 24, 26 betätigbar ist.

Die den Fig. 3 und 4 zu entnehmende Konstruktion ist im Vergleich zu der der Fig. 1 und 2 vom Aufbau dahingehend einfacher, als dass sich eine problemlosere Montage ergeben kann, insbesondere, weil beteiligte Bauelemente extern als Baugruppe auf der Zwischenwand 30 vormontiert in das Gehäuse 28 eingesetzt werden können. Unabhängig davon ist jedoch mit der Konstruktion der Fig. 3 und 4 ebenfalls eine steile Kennlinie erzielbar, um die Schalter 22, 24, 26 zu betätigen.

## Patentansprüche

1. Stellantrieb (10, 12) zum Betätigen von zumindest einem Signalgeber (22, 24, 26), insbesondere elektromechanischer Stellantrieb zum Betätigen von zumindest eines Schalters wie Mikroschalter, umfassend eine über einen Antrieb (14) wie Motor drehbare Welle (18), die in Abhängigkeit ihrer Stellung mittelbar oder unmittelbar den Signalgeber betätigt,
**dadurch gekennzeichnet,**
**dass** in der Welle (18) oder einem Abschnitt (20) von dieser zumindest eine erste Aussparung (34, 40, 62) vorhanden ist, dass im Verstellweg der ersten Aussparung die Welle bzw. deren Abschnitt von einer Umhüllenden (32) umgeben ist, die im Bereich des zumindest einen Signalgebers (22, 24, 26) eine (zweite) Aussparung (42, 44, 46) aufweist, dass sich in der zweiten Aussparung ein Betätiger (48, 50, 52) für den Signalgeber erstreckt, der entweder durch ein radial in der ersten Aussparung verschiebbares erstes Element (36) oder ein in die erste Aussparung einbringbares in der zweiten Aussparung verschiebbares zweites Element (56, 58, 60) betätigbar ist.

2. Stellantrieb nach Anspruch 1,
**dadurch gekennzeichnet,**
**dass** die Welle (18) bzw. deren Abschnitt (20) von einer Hülse bzw. hohlzylindrischen Abschnitt (32) als die Umhüllende umgeben ist, in der sich radial die zumindest eine zweite Aussparung (42, 44, 46) erstreckt.

3. Stellantrieb nach Anspruch 1 oder 2,
**dadurch gekennzeichnet,**
**dass** das in der Welle (18) bzw. deren Abschnitt (20) radial verschiebbare erste Element (36) ein in Richtung der Wellenumfangsfläche kraft- wie federbeaufschlagtes Kugel- oder Bolzenelement ist.

4. Stellantrieb nach zumindest einem der vorhergehenden Ansprüche,
**dadurch gekennzeichnet,**
**dass** das erste Element wie federbeaufschlagte Kugel (36) sich bei Ausrichtung auf die in der Umhüllenden (32) vorhandene zweite Aussparung (42, 44, 46) abschnittsweise in dieser befindet.

5. Stellantrieb nach zumindest einem der vorhergehenden Ansprüche,
**dadurch gekennzeichnet,**
**dass** das in der Welle (18) bzw. deren Abschnitt (20) radial kraftbeaufschlagte erste Element (36) bei auf die zweite Aussparung (42, 44, 46) ausgerichteter Stellung auf ein Schaltglied wie Schaltstößel (48, 50, 52) des Signalgebers (20, 22, 24) wie Mikroschalter einwirkt.

6. Stellantrieb nach zumindest einem der vorhergehenden Ansprüche,
**dadurch gekennzeichnet,**
**dass** sich das Schaltglied (48, 50, 52) zumindest abschnittsweise in der zweiten Aussparung (42, 44, 46) erstreckt.

7. Stellantrieb nach zumindest einem der vorhergehenden Ansprüche,
**dadurch gekennzeichnet,**
**dass** das sich innerhalb der zweiten Aussparung (42, 44, 46) erstreckende zweite Element (56, 58, 60) ein Kugelelement ist, welches in Richtung der Welle (18) bzw. deren Abschnitt (20) über das Schaltglied (48, 50, 52) wie Schaltstößel des Signalgebers (22, 24, 26) wie Mikroschalter mittelbar oder unmittelbar kraftbeaufschlagt ist und dass bei Ausrichtung der ersten Aussparung (62) auf die zweite Aussparung (42, 44, 46) das Kugelelement (56, 58, 60) bereichsweise innerhalb der ersten Aussparung verläuft.

8. Stellantrieb nach zumindest einem der vorhergehenden Ansprüche,
**dadurch gekennzeichnet,**
**dass** die erste Aussparung (62) eine im Schnitt V-förmige Nut ist, die in radialer Richtung der Welle (18) bzw. deren Abschnitt (20) verläuft.

9. Stellantrieb nach zumindest einem der vorhergehenden Ansprüche,
**dadurch gekennzeichnet,**
**dass** zumindest zwei Signalgeber wie Mikroschalter (22, 24) hintereinander in axialer Richtung der Welle (18) betrachtet angeordnet sind.

10. Stellantrieb nach zumindest einem der vorhergehenden Ansprüche,
**dadurch gekennzeichnet,**
**dass** die axial hintereinander angeordneten Signalgeber (22, 24) in Bezug auf ihr jeweiliges Schaltglied (48, 50) radial versetzt zueinander verlaufen.

11. Stellantrieb nach zumindest einem der vorhergehenden Ansprüche,
**dadurch gekennzeichnet,**
**dass** peripher um die Welle (18) bzw. deren Abschnitt (20) herum mehrere Signalgeber (22, 24, 26) angeordnet sind.

12. Stellantrieb nach zumindest einem der vorhergehenden Ansprüche,
**dadurch gekennzeichnet,**
**dass** zumindest zwei Signalgeber (22, 24, 26) bezogen auf die Welle (18) bzw. deren Achse um 90° zueinander versetzt angeordnet sind.

13. Stellantrieb nach zumindest einem der vorhergehenden Ansprüche,
**dadurch gekennzeichnet,**
**dass** in der Welle (18) bzw. deren Abschnitt (20) zumindest zwei radial erstreckende erste Aussparungen wie Sacklöcher (34, 40) verlaufen, die in parallel zueinander verlaufenden Ebenen und vorzugsweise parallel zueinander angeordnet sind.

## Claims

1. An actuator (10, 12) for operating at least one signal transmitter (22, 24, 26), in particular an electromagnetic actuator for operating at least one switch, such as a microswitch, comprising a shaft (18), which can be rotated by means of a drive (14), such as a motor, operating the signal transmitter indirectly or directly in dependence of its position,
**characterized in that**
at least one first recess (34. 40, 62) is provided in the shaft (18) or a section (20) thereof, that in the displacement path of the first recess the shaft and its section, respectively, is surrounded by an envelope (32). which has a (second) recess (42. 44, 46) in the area of the at least one signal transmitter (22, 24, 26), that an actuating device (48, 50, 52) for the signal transmitter extends in the second recess, which can be operated either by a first element (36), which is radially displaceable in the first recess, or by second element (56, 58, 60), which can be brought into the first recess and is displaceable in the second recess.

2. The actuator in accordance with claim 1,
**characterized in that**
the shaft (18) and its section (20), respectively, is surrounded by a sleeve and by a hollow-cylindrical section (32), respectively, constituting the envelope, in which the at least one second recess (42. 44, 46) extends radially.

3. The actuator in accordance with claim 1 or 2.
**characterized in that**
the first element (36). which can he radially displaced in the shaft (18) and its section (20), respectively, is a ball element or bolt element which is acted upon by a force, such as a spring, in the direction of the circumferential surface of the shaft.

4. The actuator in accordance with at least one of the preceding claims.
**characterized in that**
the first element. such as spring-loaded ball (36), when it is aligned with the second recess (42, 44. 46) provided in the envelope (32), is partially in this recess.

5. The actuator in accordance with at least one of the preceding claims.
**characterized in that**
the first element (36), which is radially charged with a force in the shaft (18) and its section (20), respectively, when it is aligned with the second recess (42, 44, 46), acts on a switch member, such as switch tappet (48, 50, 52) of the signal transmitter (20, 22, 24) such as microswitch.

6. The actuator in accordance with at least one of the preceding claims.
**characterized in that**
the switch member (48, 50. 52) at least partially extends into the second recess (42, 44, 46).

7. The actuator in accordance with at least one of the preceding claims,
**characterized in that**
the second element (56, 58, 60) extending inside the second recess (42, 44, 46) is a ball clement, which is indirectly or directly acted upon by a force in the direction of the shaft (18) and its section (20). respectively, via the switch member (48, 50, 52), such as switch tappet, of the signal transmitter (22, 24, 26), such as microswitch. and that when the first recess (62) is aligned with the second recess (42, 44, 46), the ball element (56, 58, 60) partially extends inside the first recess.

8. The actuator in accordance with at least one of the preceding claims.
**characterized in that**
the flrst recess (62) is a groove which is V-shaped in section and extends in the radial direction of the shaft (18) and its section (20). respectively.

9. The actuator in accordance with at least one of the preceding claims.
**characterized in that**
at least two signal transmitters, such as microswitches (22, 24) arc arranged one behind the other viewed in the axial direction of the shaft (18).

10. The actuator in accordance with at least one of the preceding claims.
**characterized in that**
the signal transmitter (22. 24), which arc arranged axially behind each other, extend radially offset from each other in relation to their respective switch member (48, 50).

11. The actuator in accordance with at least one of the preceding claims.
**characterized in that**
several signal transmitters (22, 24, 26) are arranged peripherally around the shaft (18) and its section (20), respectively.

12. The actuator in accordance with at least one of the preceding claims,
**characterized in that**
at least two signal transmitters (22, 24, 26) are arranged offset from each other by 90° in relation to the shaft (18) and its axis, respectively.

13. The actuator in accordance with at least one of the preceding claims,
**characterized in that**
at least two radially extending first recesses, such as blind holes (34, 40), extend in the shaft (18) and its section (20), respectively, which are arranged in planes extending parallel with each other, and preferably parallel in respect to each other.

## Revendications

1. Actionneur (10, 12) pour actionner au moins un générateur de signal (22, 24, 26) notamment actionneur électromécanique pour actionner au moins un commutateur tel qu'un microcommutateur comprenant un arbre (18) entrainé en rotation par un moyen d'entrainement (14) tel qu'un moteur qui actionne directement ou indirectement le générateur de signal en fonction de sa position,
**caractérisé en ce que**
l'arbre (18) ou un segment (20) de celui-ci comporte au moins une première cavité (34, 40, 62)
dans la course de réglage, la première cavité, l'arbre ou un segment de celui-ci est entouré par une enveloppe (32) ayant au niveau au moins d'un générateur de signal (22, 24, 26), une (seconde) cavité (42, 44, 46),
et dans la seconde cavité, il y a un organe d'actionnement (48, 50, 52) du générateur de signal qui est manoeuvré soit par un premier élément (36) coulissant radialement dans la première cavité soit par un second élément (56, 58, 60) qui peut être introduit dans la première cavité et coulisse dans la seconde cavité.

2. Actionneur selon la revendication 1,
**caractérisé en ce que**
l'arbre (18) ou son segment (20) est entouré par un manchon ou un segment cylindrique (30, 32) comme enveloppe dans laquelle s'étend radialement au moins la seconde cavité (42, 44, 46).

3. Actionneur selon l'une quelconque des revendications 1 ou 2,
**caractérisé en ce que**
le premier élément (36) qui peut coulisser radialement dans l'arbre (18) ou dans son segment (20) est un élément de goujon ou de bille chargé par une force telle qu'un ressort en direction de la surface périphérique de l'arbre.

4. Actionneur selon au moins l'une quelconque des revendications précédentes,
**caractérisé en ce que**
le premier élément tel qu'une bille (36) chargée par un ressort, en cas d'alignement sur la seconde cavité (42, 44, 46) existant dans l'enveloppe (32) se trouve par segments dans celle-ci.

5. Actionneur selon au moins l'une quelconque des revendications précédentes,
**caractérisé en ce que**
le premier élément (36) chargé par une force, radialement dans l'arbre (18) ou son segment (20), lorsqu'il est dans une position alignée sur la seconde cavité (42, 44, 46) agit sur un organe de commutation tel qu'un poussoir de commutation (48, 50, 52) et du générateur de signal (20, 22, 24) tel qu'un microcommutateur.

6. Actionneur selon au moins l'une quelconque des revendications précédentes,
**caractérisé en ce que**
l'organe de commutation (48, 50, 52) s'étend au moins partiellement dans la seconde cavité (42, 44, 46).

7. Actionneur selon au moins l'une quelconque des revendications précédentes,
**caractérisé en ce que**
le second élément (56, 58, 60) qui s'étend dans la seconde cavité (42, 44, 46) est un élément en forme de bille et il est chargé par une force directement ou indirectement en direction de l'arbre (18) ou de son segment (20) par l'organe de commutation (48, 50, 52) tel que le poussoir de commutation du générateur de signal (22, 24, 26) tel qu'un microcommutateur et
en cas d'alignement de la première cavité (62) sur la seconde cavité (42, 44, 46), l'élément de bille (56, 58, 60) pénètre en partie dans la première cavité.

8. Actionneur selon au moins l'une quelconque des revendications précédentes,
**caractérisé en ce que**
la première cavité (62) est une rainure à section en forme de V dirigée dans la direction radiale de l'arbre (18) ou de son segment (20).

9. Actionneur selon au moins l'une quelconque des revendications précédentes,
**caractérisé par**
au moins deux générateurs de signaux tels que les microcommutateurs (22, 24) placés axialement l'un derrière l'autre dans la direction de l'arbre (18).

10. Actionneur selon au moins l'une quelconque des revendications précédentes,
**caractérisé en ce que**
les générateurs de signaux (22, 24) placés axialement l'un derrière l'autre sont décalés radialement par rapport par rapport à leur organe de commutation (48, 50) respectif.

11. Actionneur selon au moins l'une quelconque des revendications précédentes,
**caractérisé en ce que**
plusieurs générateurs de signaux (22, 24, 26) sont installés à la périphérie de l'arbre (18) ou de son segment (20).

12. Actionneur selon au moins l'une quelconque des revendications précédentes,
**caractérisé en ce qu'**
au moins deux générateurs de signaux (22, 24, 26) sont décalés selon un angle de 90° par rapport à l'arbre (18) ou à son axe.

13. Actionneur selon au moins l'une quelconque des revendications précédentes,
**caractérisé en ce que**
l'arbre (18) ou son segment (20) sont traversés par au moins deux premières cavités s'étendant radialement telles que des perçages borgnes (34, 40) situés dans des plans parallèles et ces perçages sont, de préférence, parallèles entre eux.
